(19) Europäisches Patentamt
European Patent Office
Office européen des brevets

(11) **EP 2 045 941 A1**

(12) **EUROPEAN PATENT APPLICATION**
published in accordance with Art. 153(4) EPC

(43) Date of publication:
**08.04.2009 Bulletin 2009/15**

(51) Int Cl.:
*H04J 11/00* (2006.01)     *H04J 15/00* (0000.00)

(21) Application number: **07768178.1**

(86) International application number:
**PCT/JP2007/063428**

(22) Date of filing: **05.07.2007**

(87) International publication number:
**WO 2008/013034 (31.01.2008 Gazette 2008/05)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **25.07.2006 JP 2006202252**

(71) Applicant: **Sharp Kabushiki Kaisha**
**Osaka-shi, Osaka 545-8522 (JP)**

(72) Inventor: **FUKUMASA, Hidenobu**
**Narashino, Chiba 275-0015 (JP)**

(74) Representative: **Müller - Hoffmann & Partner**
**Patentanwälte**
**Innere Wiener Strasse 17**
**81667 München (DE)**

(54) **MOBILE COMMUNICATION SYSTEM, BASE STATION DEVICE, AND MOBILE STATION DEVICE**

(57) To provide a mobile communication system, base station apparatus and mobile station device for use in a data communication service such as MBMS in which a plurality of base station apparatuses transmit identical information toward a plurality of mobile station devices, to enable data transmission of high reliability by making use of a MIMO signal processing technology in an OFDM scheme. A plurality of base station apparatuses 2 having received an identical information sequence from a server by way of a base station controller 1, map the information sequence to modulation symbols, divide the modulation symbols into blocks and each allot the blocks to frequency blocks different from those of other base station apparatuses 2 and transmit the signal to mobile station devices 10. Mobile station device 10 having received the signals demodulates them by a MIMO received signal processor 13 to produce output.

FIG. 1

**Description**

Technical Field

The present invention relates to a multicast distribution type communication scheme using a cellular mobile communication system such as that called MBMS (Multimedia Broadcast Multicast Service).

Background Art

In the third generation cellular mobile communication system, a service called MBMS, which transmits multimedia information from base station equipment to a plurality of users, will be started.

MBMS uses 3G (3rd Generation, third generation mobile phone scheme) networks to offer multicast distribution (multicast) type service of video and audio. MBMS is able to simultaneously distribute the same video and audio to a large number of users in the same area in an efficient manner via point-to-multipoint connection.

In the next-generation cellular system based on the OFDM (Orthogonal Frequency Division Multiplexing) technology as one of digital communication schemes, methods for transmitting identical information from a plurality of base station apparatuses toward a plurality of mobile station devices have been investigated in order to use the scheme for MBMS. In the OFDM technology, the available bandwidth is divided into a plurality of narrow frequency components, and data symbols are allotted to individual components, which are sent and received as a combined wave. Since a plurality of carriers orthogonal to each other can be closely arranged without causing interference though part of them are overlapped, it is possible to realize broadband transmission using the limited frequency band efficiently, hence contributing to improvement of frequency use efficiency.

In this OFDM scheme, a simultaneous transmission soft combining method whereby signals from a plurality of base station apparatuses are combined over the wireless propagation path and received, has been developed and is regarded as a likely candidate (see e.g., non-patent document 1).

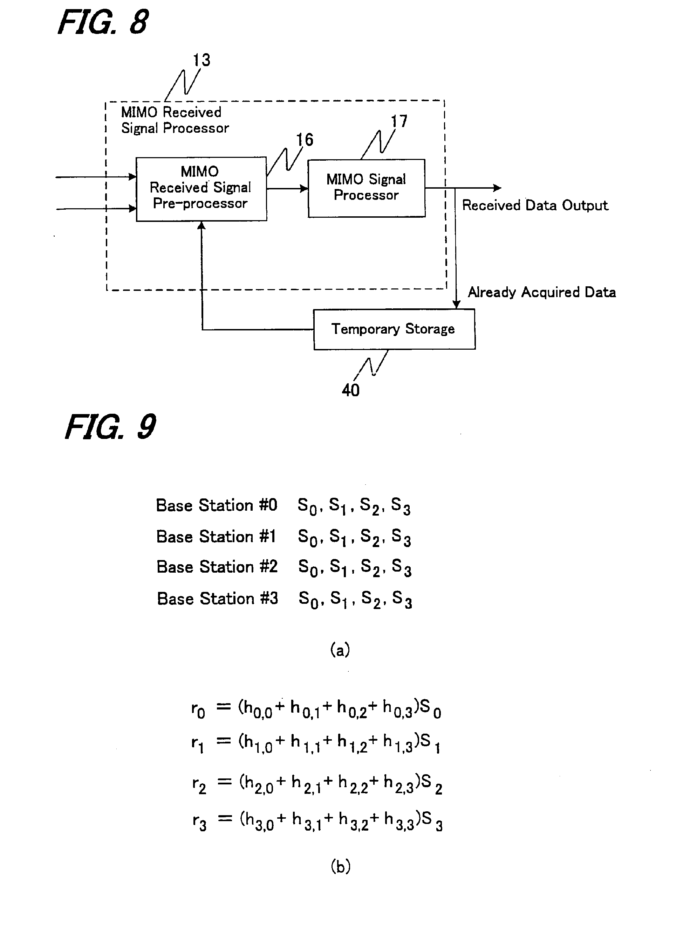

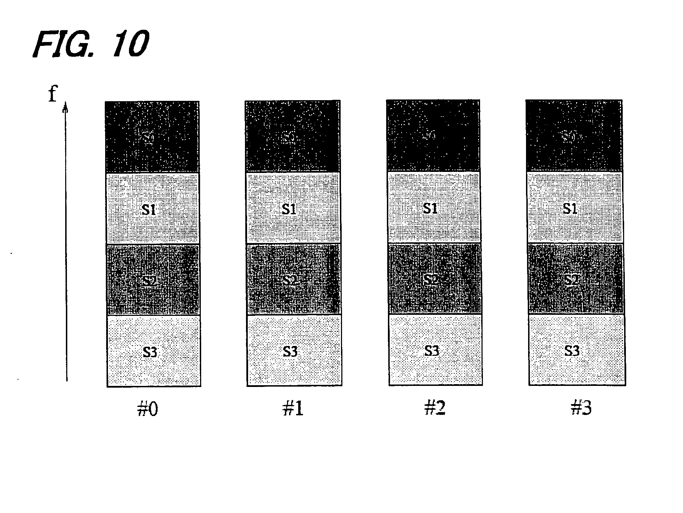

For example, description will be made presuming a case where a MBMS signal is transmitted in parallel via four base stations. The signal is decomposed into a plurality of frequency blocks (chunks). When the chunk signals are represented as S0, S1, S2 and S3, each base station apparatus sends the signals as shown in FIG. 9(a). In FIG. 9(a), the horizontal direction represents the frequency axis. The signal allocation in this case is as shown in FIG. 10. In FIG. 10, the vertical direction represents the frequency axis.

At the mobile station device, received signals r0, r1, r2 and r3 corresponding to individual frequency blocks are given as FIG. 9(b). Here, hi,j represents the communication channel gain (a complex including a phase and amplitude) corresponding to chunk i of base station apparatus #j.

The benefit of the simultaneous transmission soft combining scheme resides in the simplicity of its signal constructing process. Since the signals sent from a plurality of base station apparatuses are combined over the wireless propagation channel and then received, it is possible for the receiver to perform demodulation without the necessity of any particular signal separation process.

Non-patent document 1: NTT DoCoMo, "Investigations on Inter-Sector Diversity in Evolved UTRA Downlink", 3GPP TSG RAN WG1 Ad Hoc on LTE, R1-050615.

Disclosure of Invention

Problems to be Solved by the Invention

However, since, in simultaneous transmission soft combining, signals are combined over the wireless communication channel, the combining is not always done in a manner advantageous to the receiver. That is, even if signals are received from a plurality of base station apparatuses, it is not possible to obtain such a diversity effect as that of maximum ratio combining, which adds the received signals by weighting in correspondence to the received levels between diversity branches.

Further, there has been the problem that mobile reception is more likely to be degraded in quality than fixed reception, and delayed waves having large delay disorder the orthogonality between sub-carriers of the received signal, causing interference between the carriers when demodulated hence worsening the error rate.

On the other hand, as a technology for realizing high-speed wireless communications, MIMO (Multi Input Multi Output) has been known. MIMO is one of space-division multiplexing communication schemes and is a technique in which transmitters and receivers are each provided with a plurality of antennas, and different signals are simultaneously transmitted at the same frequency. It has been known that this scheme can present high communication quality when no error correction code is used, by implementation of signal separation based on channel information (CSI, Channel State Information), in the receiver.

The object of the present invention is to provide a mobile communication system, base station apparatus and mobile station device for use in a data communication service such as MBMS in which a plurality of base station apparatuses transmit identical information toward a plurality of mobile station devices, so as to enable highly reliable data transmission, hence improve transmission speed and lead enlargement of the communication area by applying a MIMO signal processing technique to an OFDM scheme.

Means for Solving the Problems

In view of the above circumstances, a mobile communication system according to the first invention is a mobile communication system for transmitting an identical information sequence from a server to a plurality of mobile station devices by way of a base station controller and a plurality of base station apparatuses, characterized in that the base station controller sends the identical information sequence to the plurality of base station apparatuses; the base station apparatus generates modulation symbols from the information sequence received from the base station controller and transmits the modulation symbols with different frequencies from each other to the mobile station devices; and the mobile station device detects the signals that include an identical modulation symbol, from signals including a plurality of modulation symbols in a plurality of frequencies received from the plurality of base station apparatuses, to reproduce the information sequence.

The mobile communication system according to the second invention is characterized in that a communication frequency band is divided into a plurality of frequency blocks, and the base station controller transmits control information to the base station apparatuses so that different modulation symbols will be allotted to the same frequency blocks of the plurality of base station apparatuses.

The mobile communication system according to the third invention is characterized in that the transmission signal has an OFDM (Orthogonal Frequency Division Multiplexing) format, the base station controller transmits control information to the base station apparatus so that the base station apparatus cyclically shifts the modulation symbols within the blocks corresponding to the number of subcarriers of an OFDM signal, by the amount different from those of the other base station apparatuses and allots the modulation symbols after cyclic shift to the subcarriers.

The base station apparatus according to the fourth invention is a base station apparatus for transmitting an identical information sequence received from a server by way of a base station controller to a plurality of mobile station devices, characterized in that a plurality of base station apparatuses generate modulation symbols from the information sequence received from a base station controller and transmit the modulation symbols with different frequencies from each other to the mobile station devices.

The base station apparatus according to the fifth invention is characterized in that the base station apparatus includes a frequency block allocator for dividing the modulation symbols and allocating the divided modulation symbols to different frequencies; and, based on the control information received from the base station controller, different modulation symbols are allotted to the same frequency blocks of the plurality of base station apparatuses.

The base station apparatus according to the sixth invention is characterized in that the transmission signal has an OFDM format; the base station apparatus includes a cyclic shifter for cyclically shifting the modulation symbols within the blocks corresponding to the number of subcarriers of an OFDM signal, by the amount different from those of the other base station apparatuses, in accordance with the control information received from the base station controller; and the modulation symbols after cyclic shift is allotted to the subcarriers.

The base station apparatus according to the seventh invention is characterized in that the amount of the cyclic shift is defined by the control information such that the number of subcarriers is divided by the number of the base station apparatuses of which the amount of the cyclic shift is made different from each other, and the amount of cyclic shift will be made different from one base station apparatus to another by the divided number.

The mobile station apparatus according to the eighth invention is a mobile station device for receiving identical information sequences from a server by way of a base station controller and a plurality of base station apparatuses, characterized in that the mobile station device detects signals that include an identical modulation symbol, from signals including a plurality of modulation symbols in a plurality of frequencies received from a plurality of base station apparatuses, to reproduce the information sequence.

The mobile station apparatus according to the ninth invention is characterized in that the communication frequency band is divided into a plurality of frequency blocks, and the mobile station device includes an MIMO received signal processor for separating different modulation symbols transmitted from a plurality of base station apparatuses, from received signals of the same frequency blocks, to reproduce the information sequence.

The mobile station apparatus according to the tenth invention is characterized in that a transmission signal has an OFDM format, the mobile station device includes: an OFDM signal detector for detecting an OFDM signal in which modulation symbols transmitted from the plurality of base station apparatuses are combined over a wireless communication channel; and an MIMO received signal processor for detecting signals that are allotted with an identical modulation symbol, from a plurality of subcarrier signals detected by the OFDM signal detector to reproduce the information sequence.

The mobile station apparatus according to the eleventh invention is characterized in that data having been already received are supplied to the MIMO received signal processor so as to be used to detect modulation symbols of data that are newly received.

Advantage of the Invention

In the mobile communication system, base station apparatus and mobile station device of the present invention, when a plurality of base station apparatuses transmit identical information, each base station apparatus shifts the frequency from the others and simultaneously transmits it so that the signals allocated to the same frequency become different between the base station apparatuses. Hence, the different signals are mixed together in the same frequency. The mobile station device, using the signal processing technology used in MIMO communication, processes the output signals from a plurality of antennas so that it is possible to obtain more excellent error rate characteristics than that in soft combining.

Further, use of frequency shift of the present invention improves the error rate performance compared to the prior art soft combining and enables highly reliable data transmission, thereby contributing to improvement of transmission speed and enlargement of the communication area by establishing more base stations.

Further, when part of data transmitted simultaneously has been already received correctly, modulation symbols of the correctly received data are generated to be supplied to the MIMO received signal processor once again, whereby it is possible to improve the error rate performance and reduce the amount of operation.

Brief Description of the Drawings

[FIG. 1] is a block diagram showing a system made up of a base station controller and base station apparatuses in the first embodiment.
[FIG. 2] is a block diagram showing a mobile station device in the first embodiment.
[FIG. 3] is a diagram showing a signal arrangement in a frequency shifting method of the present invention.
[FIG. 4] is a chart for graphing error rate characteristics in a frequency shifting method and soft combining method when no reception diversity is used.
[FIG. 5] is a chart for graphing error rate characteristics in a frequency shifting method and soft combining method when two-branch reception diversity is used.
[FIG. 6] is a block diagram showing a system made up of a base station controller and base station apparatuses in the second embodiment.
[FIG. 7] is a block diagram showing a mobile station device in the second embodiment.
[FIG. 8] is a block diagram of a MIMO received signal processor in a mobile station device in the third embodiment.
[FIG. 9] is a diagram showing an arrangement of signals in a conventional example.
[FIG. 10] is a diagram showing an arrangement of signals in a conventional example.

Description of Reference Numerals

| | |
|---|---|
| 1 | base station controller |
| 2 | base station apparatus |
| 3 | network |
| 4 | modulator |
| 5 | frequency block allocator |
| 6,11 | antenna |
| 10 | mobile station device |
| 12 | received signal detector |
| 13 | MIMO received signal processor |
| 14 | frequency block component extractor |
| 15,23,34 | P/S converter |
| 16 | MIMO received signal pre-processor |
| 17 | MIMO signal processor |
| 20,32 | S/P converter |
| 21 | cyclic shifter |

| 22 | IFFT unit |
| 24 | GI unit |
| 30 | OFDM signal detector |
| 31 | GI remover |
| 33 | FFT unit |
| 40 | Temporary storage |

Best Mode for Carrying Out the Invention

Next, the embodiedmodes of the present invention will be described with illustrated examples.

[The first embodiment]

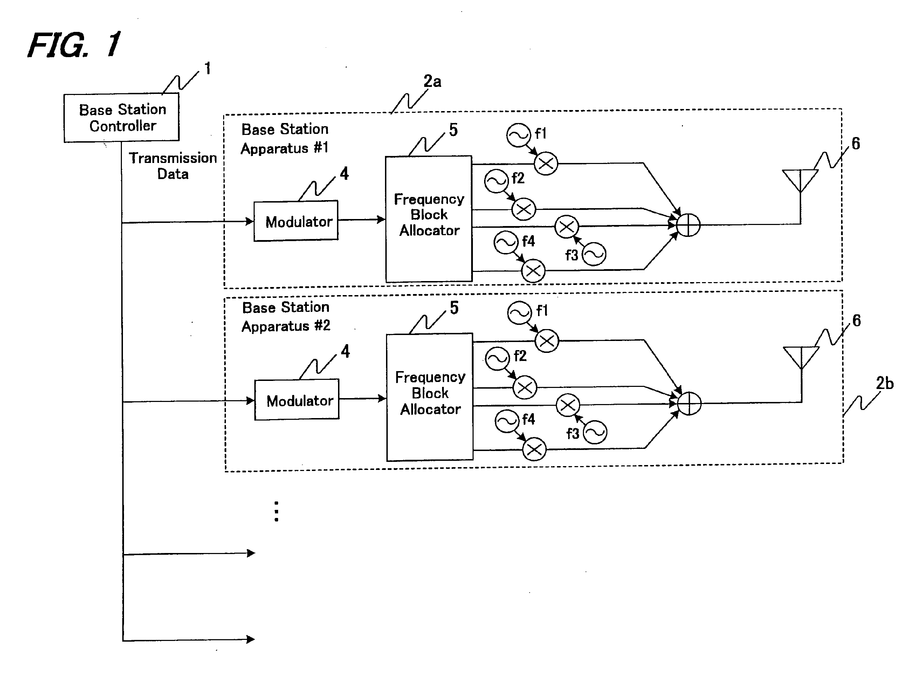

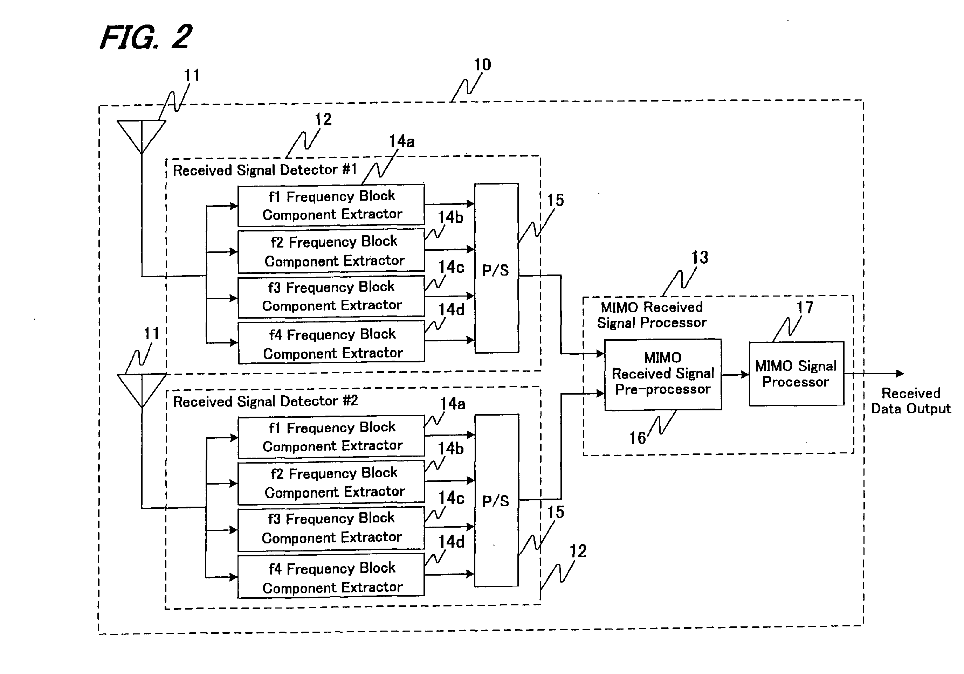

FIG. 1 shows a block diagram of a system made up of a base station controller and a plurality of base station apparatuses in the first embodiment and FIG. 2 shows a block diagram of a mobile station device (mobile terminal).

As shown in FIG. 1, a base station controller 1 and a plurality of base station apparatuses 2a and 2b are connected by a network 3.

Base station controller 1 is an apparatus for controlling a plurality of base station apparatuses 2a and 2b and is connected via a public line such as the internet or the like to a server (not shown) for performing data distribution.

Each base station apparatus 2a, 2b includes a modulator 4, a frequency block allocator 5 and an antenna 6 for transmitting data to mobile station devices.

First, base station controller 1 transmits control information on modulation, frequency allocation and the like, toward individual base station apparatuses 2a and 2b.

Each base station apparatus 2a, 2b having received the control information, sets up modulator 4 and frequency block allocator 5 with the received control information.

Data sent from the server are transmitted to the plurality of base station apparatuses 2 via base station controller 1. In each of base station apparatuses 2a and 2b, modulator 4, in accordance with the control information from base station controller, maps the bit sequence of the received transmitted data in the form of modulation symbols such as QPSK (Quadrature Phase Shift Keying) or 16QAM (16 Quadrature Amplitude Modulation).

Next, frequency block allocator 5 having received the output from modulator 4, divides the transmitted symbol sequence into four blocks, for example and allots the blocks with different frequencies f1, f2, f3 and f4 and outputs them to an antenna 6, from which the data are transmitted to mobile station devices 10.

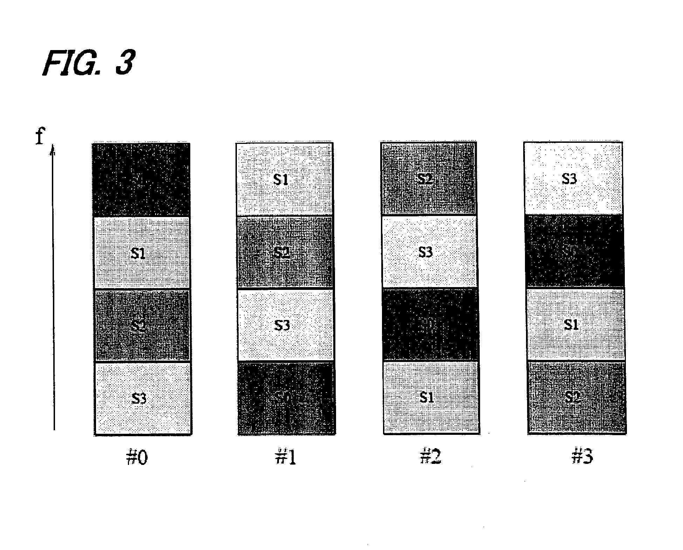

As to the signals transmitted from base station apparatuses 2 toward mobile station devices 10, a plurality of different base station apparatuses 2 following the control information from base station controller 1 allot different transmission symbol sequences to the blocks of the same frequency. For example, the signals transmitted from four base station apparatuses 2 have arrangements as shown in FIG. 3 (which will be referred to hereinbelow as "frequency shifting method"). The vertical direction represents the frequency axis. The allocation of these may also be set beforehand in base station apparatuses 2.

Further, in the system using OFDM, when the plurality of base station apparatuses 2 transmit identical information, it is also possible to transmit the information simultaneously by shifting the frequency from each other.

On the other hand, the control information relating to modulation, frequency and the like from base station controller 1 is also be transmitted to the receiving stations or mobile station devices 10 by way of base station apparatuses 2 before transmitting data.

As shown in FIG. 2, mobile station device 10 includes antennas 11 for receiving data, received signal detectors 12 and a MIMO received signal processor 13.

Also in received signal detectors 12 and MIMO received signal processor 13 in mobile station device 10, setup as to modulation, frequency and the like is done.

Mobile station device 10 having received signals via antennas 11 extracts received signals corresponding to individual frequency blocks in received signal detectors 12 connected to the antennas 11.

As shown in FIG. 2, received signal detector 12 is composed of, for example four frequency block component extractors 14a, 14b, 14c and 14d and a P/S (parallel/serial) converter 15, and separates first the received signal from base station apparatus 2 into signals corresponding to different frequencies by means of frequency block component extractors 14, and converts the signals into serial data stream through P/S converter 15.

Then, since the sub-carrier components extracted by received signal detectors 12 are in the form of a combined signal of different modulation symbols transmitted from different base station apparatuses 2, MIMO received signal processor 13 performs a process of extracting these signals and separately demodulates data for each modulation symbol from different base station apparatus 2 and outputs them.

MIMO received signal processor 13 is composed of a MIMO received signal pre-processor 16 and a MIMO signal processor 17. First, MIMO received signal pre-processor 16 converts the received signal sequences into a typical MIMO signal format as in the following equation and outputs it to MIMO signal processor 17.

[Math 1]

$$
\begin{bmatrix} r_0 \\ r_1 \\ r_2 \\ r_3 \end{bmatrix} = \begin{bmatrix} h_{0,0}S_0 + h_{0,1}S_1 + h_{0,2}S_2 + h_{0,3}S_3 \\ h_{1,0}S_1 + h_{1,1}S_2 + h_{1,2}S_3 + h_{1,3}S_0 \\ h_{2,0}S_2 + h_{2,1}S_3 + h_{2,2}S_0 + h_{2,3}S_1 \\ h_{3,0}S_3 + h_{3,1}S_0 + h_{3,2}S_1 + h_{3,3}S_2 \end{bmatrix} = \begin{bmatrix} h_{0,0} & h_{0,1} & h_{0,2} & h_{0,3} \\ h_{1,3} & h_{1,0} & h_{1,1} & h_{1,2} \\ h_{2,2} & h_{2,3} & h_{2,0} & h_{2,1} \\ h_{3,1} & h_{3,2} & h_{3,3} & h_{3,0} \end{bmatrix} \begin{bmatrix} S_0 \\ S_1 \\ S_2 \\ S_3 \end{bmatrix} \tag{1}
$$

Then, MIMO signal processor 17 separates the MIMO signal to demodulate data for every modulation symbol. The signal processing method to be used in MIMO signal processor 17 may employ typical processing methods for MIMO receivers such as MLD (Maxmal Likelihood Detection, signal separation based on maximal likelihood estimation), V-BLAST (Vertical-Bell Laboratories Layered Space Time, signal separation based on the ordered successive decoding) and the like. The present invention is not limited to any of these processing methods.

Further, though two-branch receiving antennas as shown are used, a single receiving antenna may also be used to attain the purpose or a greater number of antennas may be used.

In both soft combining and frequency shifting, whichever ones are chosen, the signals from a plurality of base station apparatuses become mixed together on the wireless propagation path in any way and are received in the mobile station devices. Since in the soft combining method the same signals mixed together are received, the resultant is interpreted as a model as if the signal transmitted from one base station apparatus is received through multi-path channels. In contrast, in the frequency shifting method, the signals allotted to the same frequency are different from one base station to another, the resultant signal is a mixture of different signals when a particular frequency component is observed. However, when the signal component is joined with the components of the other frequencies, the resultant is arranged as the combination of the same modulation symbols, hence can be taken as a MIMO channel comprehensively. That is, in the present invention, the above signal can be separated and received at the mobile station device by using the signal processing technology used in MIMO communication.

In order to demonstrate the effect of the frequency shifting method of the present invention, the error rate characteristics in the soft combining method of the prior art and the frequency shifting method according to the present invention were estimated by computer simulation. Each channel coefficient was set up at random at a value corresponding to independent Rayleigh fading so that bit error rate was determined for each. QPSK symbols were used for transmission while no error correction coding was performed.

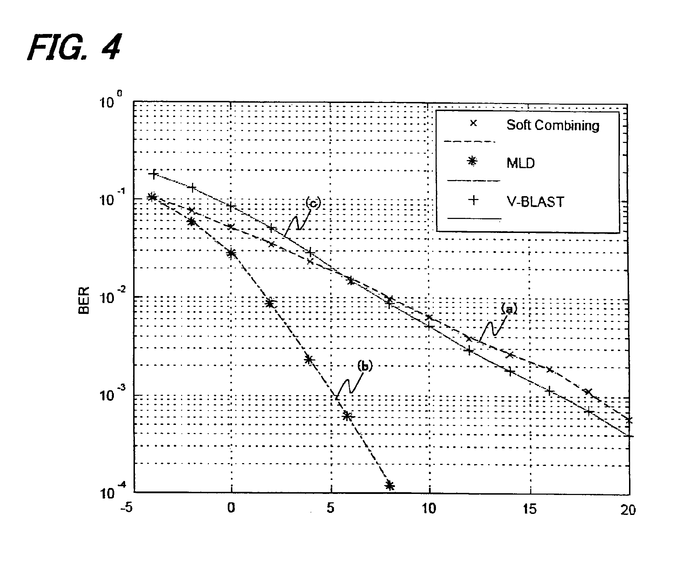

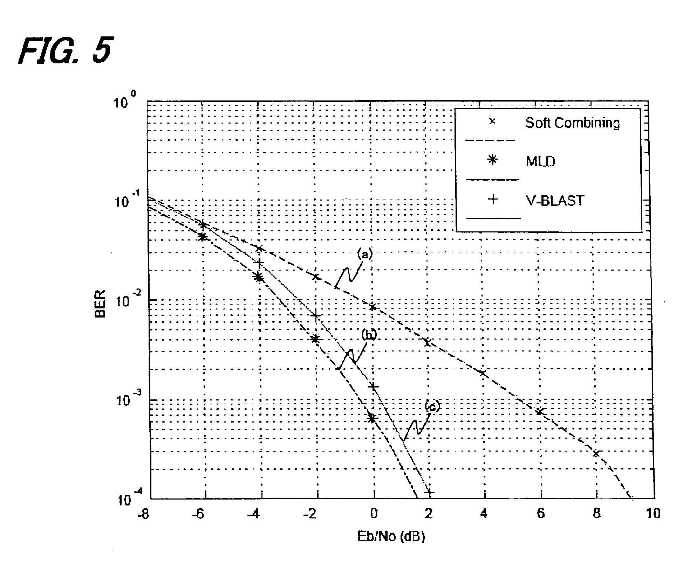

Graphs of the error rate characteristics are shown in FIGS. 4 and 5. The horizontal axis Eb=No (dB) represents the ratio of the energy per information bit for each transmission/reception branch to noise density (SNR, Signal to Noise Ratio), indicating that the greater the numerical value, the lower the noise is or the higher the signal quality is obtained. The vertical axis represents the bit error rate (BER, Bit Error Rate). As SNR improves, BER becomes smaller.

That is, the slope lowering rightwards becoming steeper means that the transmission scheme has higher quality.

As to the signal format, soft combining (a) and frequency shifting were used. For demodulation in frequency shifting, MLD(b) and V-BLAST(c) were used. FIG. 4 shows a case where no reception diversity is used with four base stations. FIG. 5 shows a case where two-branch reception diversity is used with four base stations.

When no reception diversity is used as in FIG. 4, there is little difference between the soft combining (a) and the V-BLAST (frequency shifting method) (c), and the MLD (frequency shifting method) (b) alone presents the advantageous result.

When reception diversity is used as in FIG. 5, the characteristic of the V-BLAST (frequency shifting method) (c) is significantly improved to be closer to the MLD (frequency shifting method) (b), hence both the V-BLAST (frequency shifting method) (c) and the MLD (frequency shifting method) (b) present advantageous result.

It is understood from the above result that when reception diversity is used, the frequency shifting method can present excellent error rate characteristics.

In the above way, when a plurality of base station apparatuses transmit identical information, each base station apparatus shifts the frequency from the others and simultaneously transmit it so that the signals allocated to the same frequency become different between the base station apparatuses. Hence the different signals are mixed together in the same frequency. The mobile station device, using the signal processing technology used in MIMO communication, processes the output signals from a plurality of antennas so that it is possible to obtain excellent error rate characteristics.

Use of frequency shift of the present invention improves the error rate performance compared to the prior art soft combining and enables highly reliable data transmission, thereby contributing to improvement of transmission speed and enlargement of the communication area by establishing more base stations.

[The second embodiment]

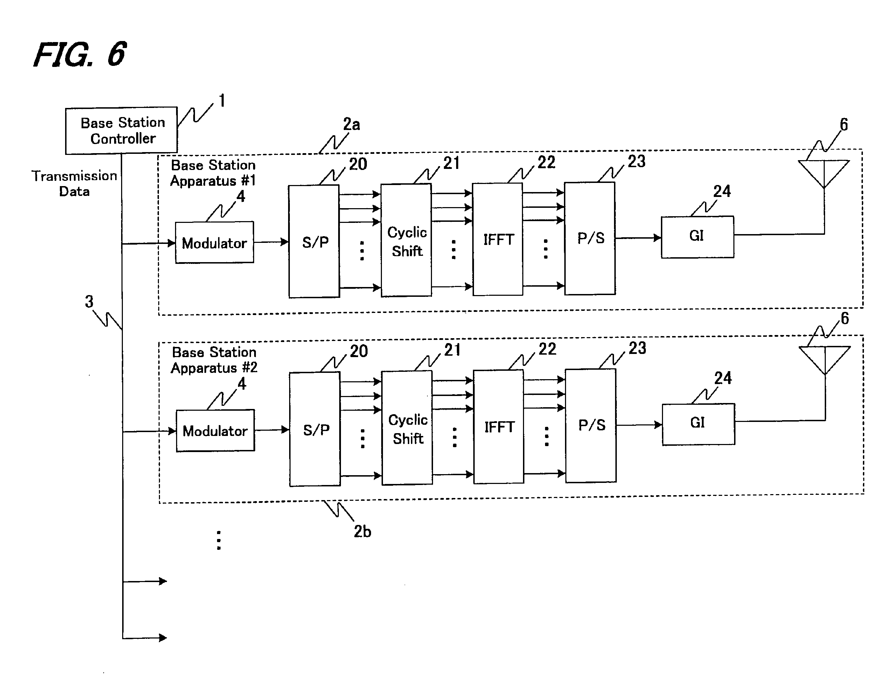

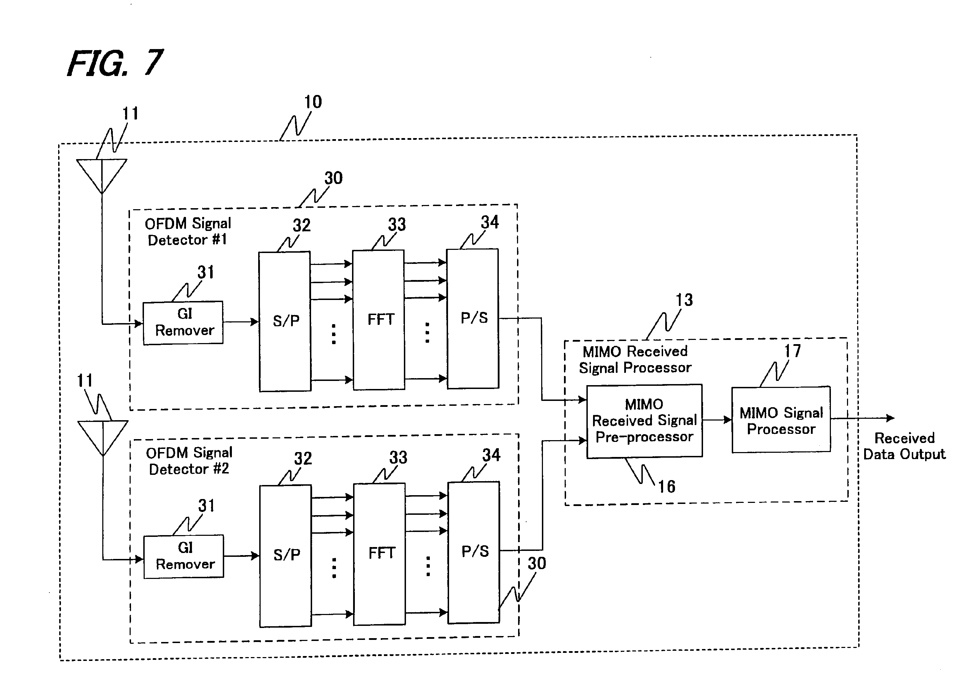

FIG. 6 shows a block diagram of a system made up of a base station controller and a plurality of base station apparatuses in the second embodiment, and FIG. 7 shows a block diagram of a mobile station device. In the drawings, the components allotted with the same reference numerals as in FIGS. 1 and 2 represent the same components.

Similarly to the first embodiment, base station controller 1 transmits control information to each of base station apparatuses 2a and 2b before data transmission so that each of base station apparatuses 2a and 2b is set up with the control information.

The server transmits identical transmission data to the plurality of base station apparatuses 2 by way of base station controller 1.

As shown in FIG. 6, each base station apparatus 2a, 2b includes a modulator 4, a S/P (serial/parallel) converter 20, a cyclic shifter 21, an IFFT (Inverse Fast Fourier Transform) unit 22, a P/S converter 23, a GI (guard interval) unit 24 and an antenna 6 for mobile station devices.

Modulator 4 in each base station apparatus 2 received transmission data from base station controller 1 maps the transmitted bit sequence in the form of modulation symbols such as QPSK or 16QAM, then S/P converter 20 performs S/P conversion of every modulation symbol to convert them into parallel data streams.

Next, cyclic shifter 21 performs frequency shift based on the control information received from base station controller 1, so that different modulation symbols will be mapped onto the same sub-carrier in the plurality of adjacent base station apparatuses 2. That is, frequency shift is performed so that allocation of modulation symbols to the subcarriers is made different from one base station apparatus to another to realize such relationship that the modulation symbols transmitted from the plurality of base station apparatuses 2 are cyclically shifted on the frequency axis.

Specifically, the modulation symbols are cyclically shifted in the blocks of the number of subcarriers in the OFDM signal, by the amount different from that of the other base station apparatuses, so that the modulation symbols after cyclic shift are allotted to the sub carriers. The amount of cyclic shift has been set beforehand so that when the number of subcarriers is Nc, for example four base station apparatuses will have shifts of 0, Nc/4, Nc/2 and 3Nc/4.

As a result of the frequency shifting, the signal arrangement having the relationship shown in FIG. 3 is obtained. The vertical direction represents the frequency axis.

Thereafter, IFFT unit 22 performs inverse transformation, then P/S converter 23 converts the signal into a serial data stream to produce a time-domain sequence of the transmission signal. Further, GI unit 24 adds buffering sections (guard time) called guard intervals following the practice in a typical OFDM scheme, to the transmission signal, then the thus obtained signal is transmitted to each of base station apparatuses 2.

Also in the second embodiment, the control information relating to modulation, frequency and the like from base station controller 1 has been transmitted to mobile station devices 10 before data transmission through the intermediary of base station apparatuses 2.

As shown in FIG. 7, mobile station device 10 includes antennas 11 for receiving data, OFDM signal detectors 30, a MIMO received signal processor 13.

Each mobile station device 10 receives OFDM signals from base station apparatuses 2 via antennas 11. OFDM signal detector 30 is composed of a GI remover 31, a S/P converter 32, a FFT (Fast Fourier Transform) unit 33 and a P/S converter 34. In GI remover 31 connected to receiving antenna 11, guard intervals are removed from the received signal, then the signal is converted into parallel signals by S/P converter 32, then the signals are subjected to fast Fourier transform by FFT unit 33, the parallel signals are converted into a serial signal by P/S converter 34 and subcarrier components of the received signal are extracted.

Next, since the subcarrier component extracted by OFDM signal detectors 30 is a combined signal of different modulation symbols transmitted from different base station apparatuses 2, MIMO received signal processor 13 performs separation of these signals.

MIMO received signal processor 13 is composed of a MIMO received signal pre-processor 16 and a MIMO signal processor 17.

First, MIMO received signal pre-processor 16 converts the received signal sequences into a typical MIMO signal format and outputs it to MIMO signal processor 17. The signal format is the same as that in the first embodiment.

Then, MIMO signal processor 17 separates the MIMO signal to demodulate data for each of the modulation symbols from different base station apparatuses 2 to produce received data output.

The signal processing method to be used in MIMO signal processor 17 may employ typical processing methods for MIMO receivers such as MLD, V-BLAST and the like. In the present invention the processing method should not be limited.

Further, though two-branch receiving antennas are shown herein, a single receiving antenna may also be used to realize the purpose or a greater number of antennas may be used.

In data communications of this mode, error control using error detection codes or error correction codes is often used. Though in the present embodiment, these processes are not particularly described, implementation of error control by sectioning transmission data into frames or implementation of error control for every frequency block can be easily applied.

[The third embodiment]

In data communication of a broadcasting type such as MBMS for transmitting identical data to a plurality of mobile station devices, a case can be considered in which identical information is transmitted periodically with intervals of a certain period. In this case, part of the data that is transmitted simultaneously has been already received by a mobile station device.

The present embodiment is aimed at improving the error rate performance and reducing the amount of operation by making use of the information of the data that has been received correctly for the data process that follows.

FIG. 8 shows a MIMO received signal processor 13 in a mobile station device in the third embodiment. Similarly to the first and second embodiments, the basic configuration is comprised of a MIMO received signal pre-processor 16 and a MIMO signal processor 17.

The validity of the received data is verified using error detecting codes etc. by MIMO signal processor 17. The data that have been correctly received, output fromMIMO signal processor 17, are stored in a temporary storage 40 so that part of it is supplied as necessary to MIMO received signal pre-processor 16.

In MIMO received signal pre-processor 16, when the data being stored in temporary storage 40 are included in the received signal, the data are taken out from temporary storage 40 so as to be used for the MIMO received signal pre-processing. Specifically, the received signal component corresponding to that data is generated and removed from the received signal.

In this way, when a series of received data is partly correct and partly incorrect, or when data that are the same as the data having been already received correctly are newly received, the data having been already received correctly are supplied to MIMO received signal pre-processor 16 while the signal component corresponding to that data is removed, whereby it is possible to improve the error rate performance and reduce the amount of operation.

It should be noted that the mobile communication system, base station apparatus and mobile station device of the present invention are not limited to the above illustrated examples. It goes without saying that various changes can be added without departing from the scope of the present invention.

Industrial Applicability

As described heretofore, according to the present invention, each of the plurality of base station apparatuses that receive identical information sequence from the server by way of the base station controller, maps the information sequence onto modulation symbols, divide modulation symbols into blocks, allocates them to frequency blocks that are different from those of other base station apparatuses and transmits the signal to mobile station devices while the mobile station device demodulates the signals by the MIMO received signal processor to produce output, whereby the error rate performance is improved so as to enable highly reliable data transmission, thus contributing to improvement of transmission speed and enlargement of the communication area by establishing more base stations.

**Claims**

1. A mobile communication system for transmitting an identical information sequence from a server to a plurality of mobile station devices by way of a base station controller and a plurality of base station apparatuses, wherein
   the base station controller sends the identical information sequence to the plurality of base station apparatuses;
   the base station apparatus generates modulation symbols from the information sequence received from the base station controller and transmits the modulation symbols with different frequencies from each other to the mobile station devices; and
   the mobile station device detects the signals that include an identical modulation symbol, from signals including a plurality of modulation symbols in a plurality of frequencies received from the plurality of base station apparatuses, to reproduce the information sequence.

2. The mobile communication system according to Claim 1,

wherein a communication frequency band is divided into a plurality of frequency blocks, and the base station controller transmits control information to the base station apparatuses so that different modulation symbols will be allotted to the same frequency blocks of the plurality of base station apparatuses.

3. The mobile communication system according to Claim 1,
wherein the transmission signal has an OFDM (Orthogonal Frequency Division Multiplexing) format, the base station controller transmits control information to the base station apparatus so that the base station apparatus cyclically shifts the modulation symbols within the blocks corresponding to the number of subcarriers of an OFDM signal, by the amount different from those of the other base station apparatuses and allots the modulation symbols after cyclic shift to the subcarriers.

4. A base station apparatus for transmitting an identical information sequence received from a server by way of a base station controller to a plurality of mobile station devices, wherein
a plurality of base station apparatuses generate modulation symbols from the information sequence received from a base station controller and transmit the modulation symbols with different frequencies from each other to mobile station devices.

5. The base station apparatus according to Claim 4, wherein the base station apparatus includes a frequency block allocator for dividing the modulation symbols and allocating the divided modulation symbols to different frequencies; and, based on the control information received from the base station controller, different modulation symbols are allotted to the same frequency blocks of the plurality of base station apparatuses.

6. The base station apparatus according to Claim 4, wherein the transmission signal has an OFDM format; the base station apparatus includes a cyclic shifter for cyclically shifting the modulation symbols within the blocks corresponding to the number of subcarriers of an OFDM signal, by the amount different from those of the other base station apparatuses, in accordance with the control information received from the base station controller; and the modulation symbols after cyclic shift is allotted to the subcarriers.

7. The base station apparatus according to Claim 6, wherein the amount of the cyclic shift is defined by the control information such that the number of subcarriers is divided by the number of the base station apparatuses of which the amount of the cyclic shift is made different from each other, and the amount of cyclic shift will be made different from one base station apparatus to another by the divided number.

8. A mobile station device for receiving identical information sequences from a server by way of a base station controller and a plurality of base station apparatuses, wherein
the mobile station device detects signals that include an identical modulation symbol, from signals including a plurality of modulation symbols in a plurality of frequencies received from a plurality of base station apparatuses, to reproduce the information sequence.

9. The mobile station device according to Claim 8, wherein the communication frequency band is divided into a plurality of frequency blocks, and the mobile station device includes an MIMO received signal processor for separating different modulation symbols transmitted from a plurality of base station apparatuses, from received signals of the same frequency blocks, to reproduce the information sequence.

10. The mobile station device according to Claim 8, wherein
a transmission signal has an OFDM format,
the mobile station device includes: an OFDM signal detector for detecting an OFDM signal in which modulation symbols transmitted from the plurality of base station apparatuses are combined over a wireless communication channel; and
an MIMO received signal processor for detecting signals that are allotted with an identical modulation symbol, from a plurality of subcarrier signals detected by the OFDM signal detector to reproduce the information sequence.

11. The mobile station device according to Claim 9 or 10,
wherein data having been already received are supplied to the MIMO received signal processor so as to be used to detect modulation symbols of data that are newly received.

# FIG. 1

EP 2 045 941 A1

# FIG. 2

10

Received Signal Detector #1 — 12

14a — f1 Frequency Block Component Extractor
14b — f2 Frequency Block Component Extractor
14c — f3 Frequency Block Component Extractor
14d — f4 Frequency Block Component Extractor

P/S — 15

Received Signal Detector #2 — 12

14a — f1 Frequency Block Component Extractor
14b — f2 Frequency Block Component Extractor
14c — f3 Frequency Block Component Extractor
14d — f4 Frequency Block Component Extractor

P/S — 15

11

MIMO Received Signal Processor — 13

MIMO Received Signal Pre-processor — 16

MIMO Signal Processor — 17

Received Data Output

FIG. 3

## FIG. 4

FIG. 5

# FIG. 6

EP 2 045 941 A1

# FIG. 7

EP 2 045 941 A1

## *FIG. 8*

## *FIG. 9*

Base Station #0    $S_0, S_1, S_2, S_3$

Base Station #1    $S_0, S_1, S_2, S_3$

Base Station #2    $S_0, S_1, S_2, S_3$

Base Station #3    $S_0, S_1, S_2, S_3$

(a)

$$r_0 = (h_{0,0} + h_{0,1} + h_{0,2} + h_{0,3})S_0$$

$$r_1 = (h_{1,0} + h_{1,1} + h_{1,2} + h_{1,3})S_1$$

$$r_2 = (h_{2,0} + h_{2,1} + h_{2,2} + h_{2,3})S_2$$

$$r_3 = (h_{3,0} + h_{3,1} + h_{3,2} + h_{3,3})S_3$$

(b)

## FIG. 10

## INTERNATIONAL SEARCH REPORT

| International application No. |
|---|
| PCT/JP2007/063428 |

A.  CLASSIFICATION OF SUBJECT MATTER
*H04J11/00*(2006.01)i, *H04J15/00*(2006.01)i

According to International Patent Classification (IPC) or to both national classification and IPC

B.  FIELDS SEARCHED

Minimum documentation searched (classification system followed by classification symbols)
H04J11/00, H04J15/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 3022865 B1  (Kabushiki Kaisha Advanced Digital Television Broadcasting Laboratory), 04 November, 2000 (04.11.00), Par. Nos. [0004] to [0006], [0047]; Fig. 3 & JP 2000-201130 A | 1,4,8<br>2,3,5-7,9-11 |
| A | WO 2005/081481 A1  (DOCOMO COMMUNICATIONS LABORATORIES EUROPE GMBH), 01 September, 2005 (01.09.05), Fig. 15 & EP 1716680 A0 | 1-11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 October, 2007 (01.10.07) | 16 October, 2007 (16.10.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/063428

C (Continuation).   DOCUMENTS CONSIDERED TO BE RELEVANT

| Category* | Citation of document, with indication, where appropriate, of the relevant passages | Relevant to claim No. |
|---|---|---|
| A | Yoshihisa KISHIYAMA, Ken'ichi HIGUCHI, Mamoru SAWAHASHI, "Evolved UTRA Kudari Link OFDM Musen Access ni Okeru Chokko Pilot Channel Koseiho", 2006 Nen The Institute of Electronics, Information and Communication Engineers Sogo Taikai Koen Ronbunshu, Communication 1, The Institute of Electronics, Information and Communication Engineers, 08 March, 2006 (08.03.06), page 435 | 1-11 |
| A | Nobuhiko MIKI, Yoshihisa KISHIYAMA, Ken'ichi HIGUCHI, Mamoru SAWAHASHI, "Kudari Link Evolved UTRA OFDM Musen Access ni Okeru Shuhasu Scheduling o Tekiyo shita Bai no Tekio Henfukucho· Channel Fugoka no Kento", 2006 Nen The Institute of Electronics, Information and Communication Engineers Sogo Taikai Koen Ronbunshu, Communication 1, The Institute of Electronics, Information and Communication Engineers, 08 March, 2006 (08.03.06), page 436 | 1-11 |
| A | NTT DoCoMo, Pilot Channel and Scrambling Code in Evolved UTRA Downlink, 3GPP TSG RAN WG1 Ad Hoc LTE, R1-050859, 2005.06.21, pp.1-24 | 1-11 |
| A | NTT DoCoMo, Physical Channels and Multiplexing in Evolved UTRA Downlink, 3GPP TSG RAN WG1 Ad Hoc on LTE, R1-050590, 2005.06.21, pp.1-24 | 1-11 |
| A | NTT DoCoMo, Investigations on Inter-Sector Diversity in Evolved UTRA Downlink, 3GPP TSG RAN WG1 Ad Hoc on LTE, R1-050615, 2005.06.21, pp.1-7 | 1-11 |

Form PCT/ISA/210 (continuation of second sheet) (April 2005)